(19) **Europäisches Patentamt**
**European Patent Office**
**Office européen des brevets**

(11) **EP 3 173 222 B1**

(12) **EUROPEAN PATENT SPECIFICATION**

(45) Date of publication and mention
of the grant of the patent:
**25.12.2019 Bulletin 2019/52**

(21) Application number: **16199194.8**

(22) Date of filing: **16.11.2016**

(51) Int Cl.:
**B29D 30/36** (2006.01)     **B29D 30/70** (2006.01)
**B29D 30/22** (2006.01)     **B29D 30/26** (2006.01)
**B29D 30/30** (2006.01)     **B29D 30/58** (2006.01)
**B29D 30/08** (2006.01)     **B29D 30/00** (2006.01)
**B60C 9/00** (2006.01)     **B60C 9/18** (2006.01)
**B29K 621/00** (2006.01)     **B60C 9/20** (2006.01)

(54) **METHOD OF MANUFACTURING A TIRE WITH A MONOLAYER BELT COMPONENT**

VERFAHREN ZUR HERSTELLUNG EINES REIFENS MIT EINER EINSCHICHTIGEN GÜRTELKOMPONENTE

PROCÉDÉ DE FABRICATION D'UN PNEU AYANT UN COMPOSANT DE COURROIE MONOCOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2015 US 201514950734**

(43) Date of publication of application:
**31.05.2017 Bulletin 2017/22**

(73) Proprietor: **The Goodyear Tire & Rubber Company Akron, Ohio 44316 (US)**

(72) Inventors:
• **BONNET, Gilles**
  **L-9176 Niederfeulen (LU)**
• **SANKAR, Vaidyanathan**
  **L-9137 Schieren (LU)**
• **MUTHIGI, Phaniraj**
  **Copley, OH Ohio 44321 (US)**

• **LAERMANS, Steven Kris Herman**
  **B-6810 Chiny (BE)**
• **HUBBELL, David Ray**
  **Hartville, OH Ohio 44632 (US)**
• **LACO, Joseph Henry**
  **Akron, OH Ohio 44310 (US)**

(74) Representative: **Kutsch, Bernd**
  **Goodyear S.A.**
  **Patent Department**
  **Avenue Gordon Smith**
  **7750 Colmar-Berg (LU)**

(56) References cited:
FR-A1- 2 429 678     US-A- 2 814 331
US-A- 3 589 426     US-A- 3 720 569
US-A- 4 269 649     US-A- 4 528 052
US-A- 4 673 014     US-A- 5 380 384
US-A1- 2005 194 076     US-A1- 2012 067 476

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of Invention

This invention relates to pneumatic tires and, in particular, to passenger tires or motorcycle tires. It also relates to a method of manufacturing a tire comprising a monolayer belt component.

Background of the Invention

Conventional motorcycle tires utilize very wide treads which, in transverse cross-section, are sharply curved to provide good contact with the road surface when the motorcycle is steeply banked in cornering. Maintenance of a consistent ground contact area or 'tire footprint' under all conditions is a major factor in determining general vehicle handling. Of particular importance in race motorcycle tires of radial construction is a characteristic of high cornering power with stability to maximize cornering speeds under race conditions.

Conventional radial passenger tires have relatively short sidewalls which extend to the tread edges radially and axially outwardly from the tires beads. The beads provide engagement to the wheel rim on tapered bead seats. The sidewalls are reinforced by radial carcass plies which, when tensioned by the inflation pressure, act together with sidewall geometry to provide a fixed location for the curved tread regions to withstand cornering forces.

The sharply curved tread region of the conventional motorcycle tire or of the conventional low aspect ration passenger tire may be specially reinforced by a reinforcing breaker to give the required structural rigidity to allow for banking of the vehicle when cornering or to improve cornering stiffness while also providing sufficient flexibility to allow localized tread flattening in the ground contact patch for good road grip.

A conventional passenger tire may use a center hard tread compound and differing shoulder tread compounds. Some race circuits even necessitate uneven shoulder wear and grip.

Existing processes for producing these tires often involve an extrusion or calendering step which increase production cost and which may increase scrap. Any new and innovative manner of producing tires with reduced cost would be commercially desirable.

Also, it would be welcome to provide a tire that allows for an improved cornering stiffness or a tire whose cornering stiffness and cornering properties can be easily adjusted in tire production.

US-A-2005/0194076 describes a pneumatic tire having a crown reinforcement with a plurality of adjacent cord reinforced strips forming a belt layer.

US-A-3,720,569 describes a pneumatic tire in accordance with the preamble of claim 13 and a method of manufacturing a belt layer for a tire comprising crossed strips. A similar tire is also described in US-A-3,589,426.

FR-A-2 429 678 describes a tire comprising a single belt layer formed by helically winding a strip comprising cords.

US-A-4,673,014 describes a run-flat tire incorporating a tape-wrapped helical coil band.

US-A-4,269,649 describes a second stage tire building drum and a method for its operation.

US-A-2,814,331, US-A-5,380,384 and US-A-4,528,052 each describe a process for building a pneumatic tire and applying a belt layer on a green tire carcass.

Definitions

The following definitions are controlling for the disclosed invention.

"Apex" means an elastomeric filler element located radially above the bead core and between the plies and the turnup ply.

"Annular" means formed like a ring.

"Aspect ratio" means the ratio of its section height to its section width.

"Axial" and "axially" are used herein to refer to lines or directions that are parallel to the axis of rotation of the tire.

"Carcass" means the tire structure apart from the belt structure, tread, undertread, and sidewall rubber over the plies, but including the beads.

"Circumferential" means lines or directions extending along the perimeter of the surface of the annular tire parallel to the Equatorial Plane (EP) and perpendicular to the axial direction.

"Cord" means one or more twisted or untwisted yarns, filaments or fibers such as an assembly of a plurality of twisted yarns or filaments.

"Cord angle" means the acute angle, left or right in a plan view of the tire, formed by a cord with respect to the equatorial plane. The "cord angle" is measured in a cured but uninflated tire.

"Equatorial plane (EP)" means the plane perpendicular to the tire's axis of rotation and passing through the center of its tread.

"Fiber" is a unit of matter, either natural or man-made that forms the basic element of filaments. Characterized by having a length at least 100 times its diameter or width.

"Lateral" means an axial direction.

"Radial" and "radially" are used to mean directions radially toward or away from the axis of rotation of the tire.

"Sidewall" means that portion of a tire between the tread and the bead.

"Tread" means a molded, extruded, or shaped rubber component which, when bonded to a tire casing, includes that portion of the tire that comes into contact with the road when the tire is normally inflated and under normal load.

"Yarn" is a generic term for a continuous strand of textile fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

Summary of Invention

The invention relates to a method a manufacturing a tire in accordance with claim 1.

Dependent claims refer to preferred embodiments of the invention.

A method in accordance with a preferred aspect of the present invention manufactures a tire with a biaxial monolayer belt component (MBC). The method comprises the steps of: winding a cord continuously about a first drum according to a pre-defined pattern to create a mesh of cords defining a single belt/overlay structure; adjusting the structure to a predetermined position on the first drum by laser lights; applying a tread component to the structure; transferring the structure and tread component to a second drum; applying the structure and tread component to a carcass component on the second drum; reducing pressure of the carcass component by a predetermined amount; and stitching the structure and tread component to the carcass component.

According to another preferred aspect of the method, the predetermined amount is in the range between 100 mbar and 600 mbar, or between 190 mbar and 210 mbar.

According to still another preferred aspect of the method, further steps include individually dipping the cord and individually tackifying the cord.

According to yet another preferred aspect of the method, the cord is part of a plurality of individually dipped and individually tackified cords.

According to still another preferred aspect of the method, the cord is constructed of two twisted aramid yarns.

According to yet another preferred aspect of the method, the structure is disposed radially between the tread component and the carcass component.

According to still another preferred aspect of the method, the cord is constructed of one of the following materials: aramid, PEN, PET, PVA, PBO, POK, rayon, nylon, carbon, and glass fiber.

According to yet another preferred aspect of the method, the carcass component comprises uncured rubber.

A pneumatic tire manufactured in accordance with the present invention includes an integral belt/overlay component having a plurality of individually dipped and individually tackified cords applied individually to the tire component. The component may be, for example, a tread reinforcement structure for improving highspeed performance and manufacturing of the pneumatic tire.

According to another preferred aspect of the pneumatic tire, the cords are monofilaments or twisted yarns.

According to still another preferred aspect of the pneumatic tire, the cords are aramid cords with a Dtex in a range of from 400 Dtex to 3500 Dtex, or from 1500 Dtex to 1800 Dtex, 1670 Dtex or 1680 Dtex.

According to yet another preferred aspect of the pneumatic tire, the cords have a twist multiplier in a range of from 4 to 7 or from 5 to 6. The "twist multiplier" refers to a number that is an indicator of the helix angle that the one or more yarns in a cord make with respect to a longitudinal axis of a cord. As used herein, the twist multiplier (TM) of a cord is determined according to the following equation which is well known in the textile art:

$$TM = 0.0137\ CT \times (CD)^{1/2}$$

wherein TM is the twist multiplier; CT is the number of turns per inch (2.54 cm) of cord length; and CD is the sum of the deniers of the yarn(s), and/or sub-groups of the yarns of the cord before any twist is imparted to the yarn subgroups. The twist multiplier of a cord characterizes its physical properties, like tensile, modulus, elongation and fatigue.

According to still another preferred aspect of the pneumatic tire, the tread reinforcement structure at least partially includes a plurality of individually dipped and individually tackified cords oriented from -45° to +45° relative to a circumferential direction of the pneumatic tire.

According to yet another preferred aspect of the pneumatic tire, the cords are each constructed of one, two, three or more twisted aramid yarns.

According to still another preferred aspect of the pneumatic tire, a tackified finish is applied to the cords during or after the dipping process.

According to yet another preferred aspect of the pneumatic tire, the tackified cords are applied directly on to a carcass ply during a building process of an uncured pneumatic tire.

In another aspect of the present disclosure, a method constructs an integral belt/overlay component of a pneumatic tire. The method preferably comprises the steps of: first, pretreating an individual cord by dipping the cord in a first solution or emulsion; second, drying the individual cord; third, tackifying a surface of the dipped and dried individual cord with a second solution or emulsion; and fourth, applying the tackified individual cord on a surface of an uncured tire component.

According to another preferred aspect of the method, the tackified individual cord is applied to the uncured tire component on a tire building drum.

According to still another preferred aspect of the method, the second solution or emulsion comprises a rubber compound dissolved in a solvent. Preferably, the solvent comprises a petroleum derivative such as toluene.

According to yet another preferred aspect of the method, the applying step occurs without calendering of the individual cord.

According to still another preferred aspect of the method, the dipping includes dipping the individual cord in the first solution or emulsion, and applying an adhesion promoter and/or dipping the dipped individual cord in a further solution or emulsion prior to the drying step.

According to yet another preferred aspect of the method, the further solution or emulsion is an aqueous emulsion comprising a rubber latex containing resorcinol formaldehyde (RFL) resin.

According to a preferred aspect of the method of manufacturing the tire in accordance with the invention, the monolayer belt component is adjusted to a predetermined position on the first drum wherein the predetermined position on the first drum is indicated by optical means or an optical indicator such as one or more laser lights or beams.

According to a preferred aspect of the method of manufacturing the tire in accordance with the invention, the winding of the cord or strip is such that the predefined pattern is a biaxial pattern creating a mesh of cords or strips defining a biaxial monolayer belt component.

According to a preferred aspect of the method of manufacturing the tire in accordance with the invention, the winding of the monolayer belt component is made by winding a single cord or a single strip comprising at least one cord continuously about the first drum according to the pre-defined pattern creating the mesh of cords or strips defining the monolayer belt component.

According to a preferred aspect of the method of manufacturing the tire in accordance with the invention, the biaxial pattern comprises cords extending along a first axis at the center of the monolayer belt component and cords extending along a second axis at the center of the monolayer belt component, wherein the first axis makes an angle (cord angle) in a range of from 2 to 60 degrees, preferably 10 to 50 degrees, with the equatorial plane of the tire and wherein the second axis makes an angle (cord angle) in a range of from -2 to -60 degrees, preferably -10 to -50 degrees with the equatorial plane of the tire.

According to a preferred aspect of the method of manufacturing the tire in accordance with the invention, the biaxial pattern comprises cords extending along a first axis at the center of the monolayer belt component and cords extending along a second axis at the center of the monolayer belt component, wherein the first axis makes a first angle $\alpha$ (cord angle) with the equatorial plane of the tire and wherein the second axis makes a second angle $-\alpha$ (cord angle) with the equatorial plane of the tire.

According to a preferred aspect of the method of manufacturing the tire in accordance with the invention, a pneumatic tire is provided comprising a carcass, a single belt structure radially outside of the carcass and a tread component radially outside of the belt structure, wherein the single belt structure is a monolayer belt component consisting of a continuously wound cord or of a continuous wound strip comprising at least one cord forming a mesh of cords or strips.

Brief Description of the Drawings

Further aspects of the present invention will become apparent from the description of the following embodiments in conjunction with the attached diagrammatic drawing, in which:

FIG. 1 represents a schematic cross-sectional view of an example tire constructed in accordance with the present invention;

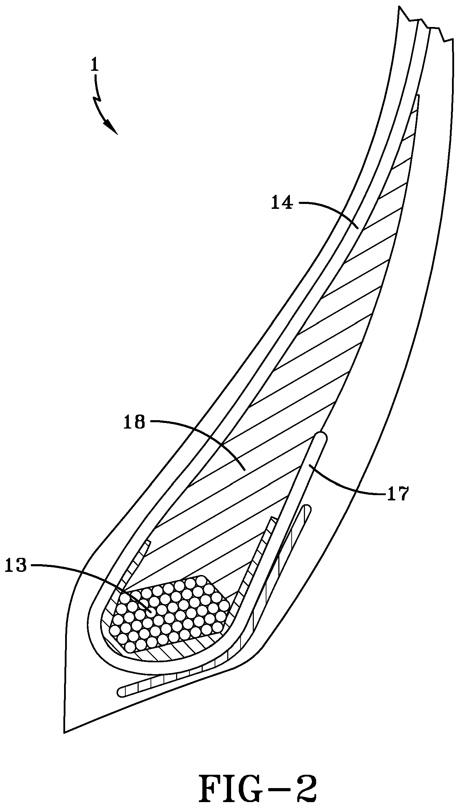

FIG. 2 represents a schematic detail view of the bead region of the example tire shown in FIG. 1;
FIG. 3 represents a schematic detail view of a belt ply constructed in accordance with the present invention;
FIG. 4 represents a schematic detail view of another belt ply constructed in accordance with the present invention; and
FIG. 5 represents a schematic detail view of still another belt ply constructed in accordance with the present invention.

Description of Example Embodiments of the Invention

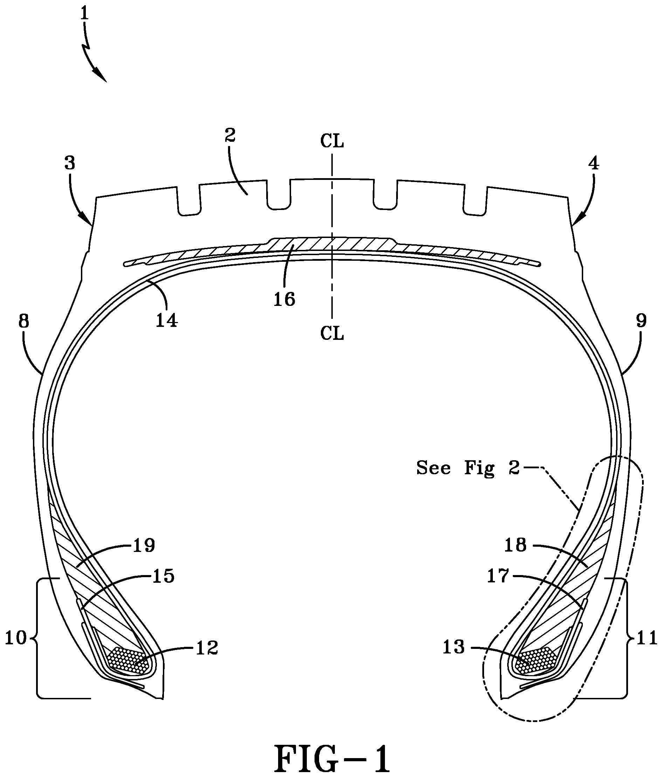

The example tire 1 of FIG. 1 includes a pair of sidewalls 8, 9 terminating in bead regions 10, 11. Each bead region 10, 11 is reinforced by an inextensible annular bead core 12, 13. Extending between each bead region 12, 13 is a tire carcass reinforcement ply structure 14 of one or more plies which is/are anchored in each bead region 10,11 by being turned around each respective bead core 12, 13 laterally from inside to outside to form each ply turn-up 15, 17. The carcass reinforcement ply structure 14 may, for example, comprise a single ply of nylon fabric cords oriented substantially in a radial direction. Each bead region 10, 11 may further comprise a hard rubber apex member 17, 18 anchored to each respective bead core 12, 13 and narrowing/tapering radially outward. The carcass ply fabric of the example tire 1 may also comprise polyester, rayon, nylon, or para-aramid cords.

The example tire 1 may have a convex tread region 2, having tread edges 3, 4 reinforced by an integral breaker assembly (or belt structure/overlay 16) in accordance with the present invention. The assembly may be a filament wound, or single end dipped, reinforcement that integrates the functionality of the belt and overlay to construct a single band of reinforcement in accordance with the present invention.

Conventional pneumatic tire designs have been based on classical composite laminate principles having several reinforcement layers in which cords are laid parallel to each other. Due to the unidirectional load carrying capability of each reinforcement layer, several such layers are stacked up to manage the force transfer in several directions. A minimum of two such reinforcement layers of steel wires has been used as a belt package along with an additional layer of reinforcement as an overlay for enhancing high speed performance. Inherent disadvantages of this conventional design are excess weight with few possible weight reductions.

The assembly 16 may eliminate the inherent disadvantages of conventional reinforcement constructions by integrating belt and overlay functionality using rubberized filament winding technology to construct a single assembly 16. Such an integral assembly 16 may further reduce weight narrowing the overlay portion of the assembly without sacrificing performance characteristics (FIG. 1).

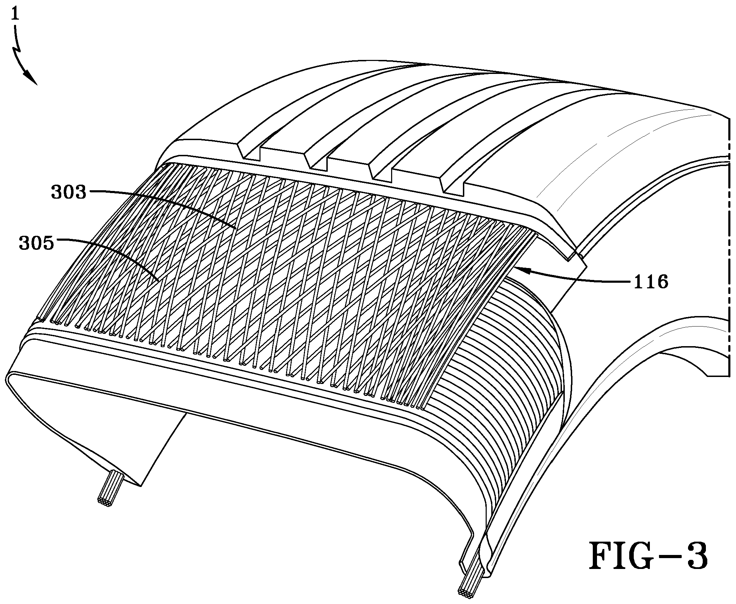

As shown in FIG. 3, the cords 305 of the wider belt portion of the assembly 16 may have equal or unequal angles relative to the circumferential direction of the tire 1 between -45° and +45°. The cords 305 of the thinner overlay portion of the assembly 16 may have equal or unequal angles relative to the circumferential direction of the tire 1 between -45° and +45°. The cords 305 may be symmetrically or asymmetrically wound and have 5-32 epi (ends per inch).

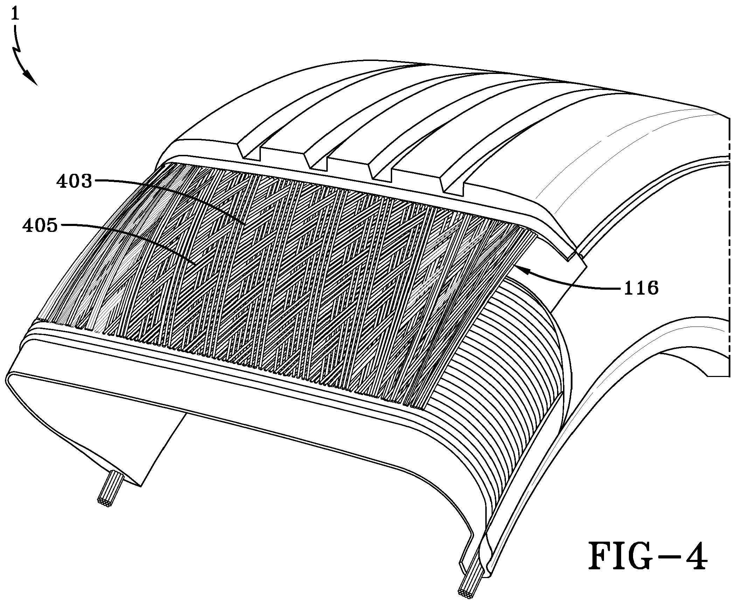

As shown in FIG. 4, the cords 405 of the wider belt portion of the assembly 16 may have equal or unequal angles relative to the circumferential direction of the tire 1 between -45° and +45°. The cords 405 of the thinner overlay portion of the assembly 16 may have equal or unequal angles relative to the circumferential direction of the tire 1 between -45° and +45°. The cords 405 may be symmetrically or asymmetrically wound and have 5-32 epi (ends per 2.54 cm).

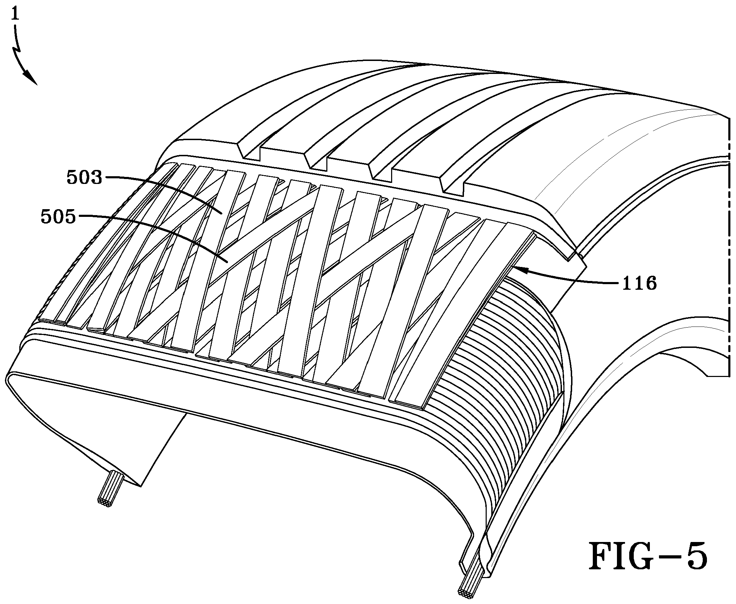

As shown in FIG. 5, the cords 505 of the wider belt portion of the assembly 16 may have equal or unequal angles relative to the circumferential direction of the tire 1 between -45° and +45°. The cords 505 of the thinner overlay portion of the assembly 16 may have equal or unequal angles relative to the circumferential direction of the tire 1 between -45° and +45°. The cords 505 may be symmetrically or asymmetrically wound and have 5-32 epi (ends per inch).

The assembly 16 may comprise single end dipped cords 305, 405, 505 which are individually dipped and subsequently individually tackified (i.e., not calendered). While the cords 305, 405, 505 may be individually dipped, a group 303, 403, 503 of several cords may also be dipped concurrently, moving through a dip process/machine in parallel. For example, the individual cords may be monofilaments, para-aramid 1680/3 Dtex with 240/240 tpm (turns per meter) or other suitable configurations. The selection of materials for the tackified finish may depend greatly upon the materials selected for use in the tire 1. One of ordinary skill may determine such suitable materials. Tackified finishes may be achieved by various methods such as coating the single end cords in an aqueous or solvent blend of resin and rubber lattices.

An example method may comprise the steps of: first, pretreating an individual cord by dipping the cord in a first solution or emulsion; second, drying the individual cord; third, tackifying a surface of the dipped and dried individual cord with a second solution or emulsion; and fourth, applying the tackified individual cord on a surface of an uncured tire component.

The second solution or emulsion may comprise a conventional un-vulcanized rubber compound dissolved in a solvent. Preferably, the solvent comprises a petroleum derivative or distillate such as toluene.

The dipping may include a treatment of the individual cord with an adhesion promoter as part of the dipping process. Typical examples of adhesion promoters include resorcinol formaldehyde latex (RFL), isocyanate based material, epoxy based material, and materials based on melamine formaldehyde resin. To this end, the dipping may include dipping the individual cord in the first solution or emulsion (or in a first bath) and subsequently dipping the dipped individual cord in a further solution or emulsion (or a second bath) prior to the drying step.

Preferably, the further solution or emulsion is an aqueous emulsion (dispersion) comprising a rubber latex containing resorcinol formaldehyde (RFL) resin. The RFL resin may be a primary element of adhesion between the cord and the rubber with the latex also reducing the modulus of the RFL resin.

The tackifying of the surface of the dipped and dried individual cord includes applying a tackified finish for facilitating adhesion, or green tack, during the building process of the green tire. The selection of materials for such tackified finish will depend greatly upon the materials selected for use in the tire, and the skilled person on the basis of his common knowledge can easily determine them appropriately. Tackified finishes can be achieved by various methods such as coating the cord in an aqueous blend of rosin and rubber lattices, or with a solvent solution or emulsion of an un-vulcanized rubber compound.

During building of the uncured tire, the cords 305, 405, 505 of the assembly 16 may be individually placed directly upon an outermost of one or two carcass plies 14, without any intermediate manufacturing process. The assembly 16 may thus provide a tread crown reinforcement structure and may optimize high speed performance, as well as provide excellent handling characteristics, while reducing overall manufacturing efficiency, cost, and weight. The present invention accomplishes this by utilizing the individually dipped and individually tackified Single End Dipped (SED) cord(s) 305, 405, 505 to integrate the belt and overlay structures. Suitable materials for the SED cords 305 may be aramid, PEN, PET, PVA, PBO, POK, Rayon, Nylon 6, 4,6 and 6,6 , carbon, and/or glass fiber. Additionally, the cords 305, 405, 505, 605 may be calendered in small tapes or strips 303, 403, 503 of 1, 2, 3, 4, etc. cords.

The cords 305, 405, 505 may be first dipped in a first "classical" solution and, in a second phase, tackified by a second solution or emulsion (as described above). Once the cord 305, 405, 505 is tackified, the cord will have enough cohesive properties to adhere to an unvulcanized component, such as the carcass 14. This provides an improvement over conventional tire building methods, which include an additional calendering step and often generate a higher amount of scrap. Further, cord properties may not be affected by calendering and storage. Also, the process provides a simpler and more efficient method, since no weft yarns are needed for weaving and calendering.

This "ready to use" SED cord assembly 16 may provide a "jointless" belt/overlay having a better controlled tension applied to the cords 305, 405, 505 during winding at a tire building machine. This may be critical for strips with multiple cords due to the curvature of a radial carcass 14. The cords 305, 405, 505 at the tread edges 3, 4 may have significantly shorter length compared to the cords at the center of the tread 2.

A method in accordance with the present invention manufactures a tire with a biaxial monolayer belt component (MBC) 116. The MBC 116 may be constructed by winding a single cord 305, 405, 505 or tape 303, 403, 503 of multiple parallel cords according to a predefined pattern to create a mesh of cords which may be dedicated to replace conventional belt(s) and overlay(s) in a conventional tire. The MBC 116 may have a higher green gauge than a conventional belt package of two breakers and an overlay, a reduced stretch compliance, and a single, continuously wound cord forming a mesh rather than conventional breakers which are made with independent cords set side by side.

This mesh may drive the use of much bigger belt building diameters for the preparation of the MBC and reduce the so called "dog bone" effect created by cords piling up at edges of the MBC 116. The "dog bone" effect is highly dependent on the winding pattern used to create the mesh.

The MBC 116 may be applied similarly to a conventional belt package. The MBC 116 may be placed on a belt building drum at a tire building machine and the belt building drum may be expanded to the same diameter as an MBC drum. The MBC 116 may be adjusted to the predetermined position by laser lights of the belt building machine. A tread component 2 may subsequently be applied on the MBC 116. A transfer ring may then pickup the MBC 116 (with the tread 2) and transfer it to a second stage drum.

The MBC 116 and tread 2 may then be applied on a green carcass component 14 as conventionally achieved. However, the inflation pressure of the green carcass component 14 may be decreased by 200 mbar in order to reduce green tire growth during tread stitching operations. Not reducing the inflation pressure may lead to a larger green tire than is required before curing.

The MBC 116 may be transferred to the green carcass 14 before setting of the tread component 2. The MBC 116 may be set on the belt building drum at the tire building machine and the belt building drum may expand to the same diameter as the MBC. The MBC 116 may be transferred by the transfer ring to the green carcass 14 or set manually on the green carcass. If the MBC 116 is set manually, the MBC may be aligned accurately with the middle of the green carcass 14.

The MBC 116 may be stitched on the green carcass 14 with an adjusted inflation pressure. The tread component 2 may then be set manually on the MBC 116 and green carcass 14 assembly before automatically stitching at usual inflation pressure minus 200 mbar, as described above. Winding time may be greatly reduced compared to conventional winding times in order to be close to the time needed to assemble the two steel breakers and the overlay in today's standard building process.

Conventional times for setting breaker 1, breaker 2, and an overlay directly on the tire building machine may be greatly reduced by installing just the prefabricated MBC 116. Further, the weight of the MBC 116 may be reduced by as much as 20%.

As stated above, an assembly 116 of SED cords produces excellent handling performance in a tire 1, as well as reducing manufacturing cost and weight. Further, a method in accordance with the present invention provides enhanced efficiency and reduced cost for constructing a pneumatic tire. Thus, the SED cords 305, 405, 505 and method both enhance the performance and/or manufacturing of a pneumatic tire, even though the complexities of the structure and behavior of the pneumatic tire are such that no complete and satisfactory theory has been propounded.

**Claims**

1. A method for manufacturing a tire with a monolayer belt component, the method comprising the steps of:

   winding a cord (305, 405, 505) or a strip comprising at least one cord (305, 405, 505) continuously about a first drum according to a predefined pattern to create a mesh of cords or strips defining a monolayer belt component (116);
   applying a tread component to the monolayer belt component (116);
   transferring the monolayer belt component (116) and the tread component to a second drum;
   applying the monolayer belt component (116) and the tread component to a carcass component on the second drum, the carcass component being inflated at a predetermined inflation pressure;
   reducing the predetermined inflation pressure of the carcass component by a predetermined amount; and

stitching the monolayer belt component (116) and the tread component to the carcass component.

2. The method of claim 1, further comprising adjusting the monolayer belt component (116) to a predetermined position on the first drum wherein the predetermined position on the first drum is indicated by optical means or an optical indicator such as one or more laser lights or beams.

3. The method of claim 1 or 2 wherein the winding of the cord (305, 405, 505) or strip is such that the pre-defined pattern is a biaxial pattern creating a mesh of cords or strips defining a biaxial monolayer belt component (116).

4. The method of claim 1, 2 or 3 wherein the winding of the monolayer belt component is made by winding a single cord or a single strip comprising at least one cord continuously about the first drum according to the pre-defined pattern creating the mesh of cords or strips defining the monolayer belt component (116).

5. The method as set forth in at least one of the previous claims wherein the predetermined amount is in the range of from 50 mbar to 600 mbar, preferably 100 mbar to 400 mbar.

6. The method as set forth in at least one of the previous claims wherein the biaxial pattern comprises cords extending along a first axis at the center of the monolayer belt component (116) and cords extending along a second axis at the center of the monolayer belt component (116), wherein the first axis makes an angle in a range of from 2 to 60 degrees, preferably 10 to 50 degrees, with the equatorial plane of the tire (1) and wherein the second axis makes an angle in a range of from -2 to -60 degrees, preferably -10 to -50 degrees with the equatorial plane of the tire (1).

7. The method as set forth in at least one of the previous claims wherein the biaxial pattern comprises cords extending along a first axis at the center of the monolayer belt component (116) and cords extending along a second axis at the center of the monolayer belt component (116), wherein the first axis makes a first angle $\alpha$ with the equatorial plane of the tire (1) and wherein the second axis makes a second angle $-\alpha$ with the equatorial plane of the tire (1).

8. The method as set forth in at least one of the previous claims further including the steps of individually dipping the cords (305, 405, 505) and/or individually tackifying the cords (305, 405, 505).

9. The method as set forth in at least one of the previous claims wherein the cord (305, 405, 505) is part of a plurality of indidually dipped and individually tackified cords.

10. The method as set forth in at least one of the previous claims wherein the cord (305, 405, 505) is constructed of two twisted aramid yarns.

11. The method as set forth in at least one of the previous claims wherein the cord (305, 405, 505) is constructed of one of the following materials: aramid, PEN, PET, PVA, PBO, POK, rayon, nylon, carbon, and glass fiber.

12. The method as set forth in at least one of the previous claims wherein the carcass component comprises uncured rubber.

**Patentansprüche**

1. Verfahren zum Fertigen eines Reifens mit einer einschichtigen Gürtelkomponente, wobei das Verfahren die folgenden Schritte umfasst:

Wickeln eines Kords (305, 405, 505) oder eines Streifens, der wenigstens einen Kord (305, 405, 505) umfasst, kontinuierlich um eine erste Trommel gemäß einem vordefinierten Muster, um ein Netz von Korden oder Streifen zu erzeugen, das eine einschichtige Gürtelkomponente (116) definiert;
Aufbringen einer Lauffflächenkomponente auf die einschichtige Gürtelkomponente (116);
Übertragen der einschichtigen Gürtelkomponente (116) und der Lauffflächenkomponente auf eine zweite Trommel;
Aufbringen der einschichtigen Gürtelkomponente (116) und der Lauffflächenkomponente auf eine Karkassenkomponente auf der zweiten Trommel, wobei die Karkassenkomponente mit einem vorbestimmten Fülldruck gefüllt wird;
Reduzieren des vorbestimmten Fülldrucks der Karkassenkomponente um eine vorbestimmte Menge; und
Nähen der einschichtigen Gürtelkomponente (116) und der Lauffflächenkomponente an die Karkassenkomponente.

2. Verfahren nach Anspruch 1, ferner umfassend ein Einstellen der einschichtigen Gürtelkomponente (116) auf eine vorbestimmte Position auf der ersten Trommel, wobei die vorbestimmte Position auf der ersten Trommel durch optische Mittel oder einen optischen Indikator wie etwa einen oder mehrere Laserlichter oder -strahlen angezeigt wird.

3. Verfahren nach Anspruch 1 oder 2, wobei das Wickeln des Kords (305, 405, 505) oder des Streifens derart ist, dass das vordefinierte Muster ein biaxiales Muster ist, das ein Netz von Korden oder Streifen erzeugt, die eine biaxiale einschichtige Gürtelkomponente (116) definieren.

4. Verfahren nach Anspruch 1, 2 oder 3, wobei das Wickeln der einschichtigen Gürtelkomponente durch Wickeln eines einzelnen Kords oder eines einzelnen Streifens, der wenigstens einen Kord umfasst, kontinuierlich um die erste Trommel gemäß dem vordefinierten Muster, das das Netz von Korden oder Streifen erzeugt, das die einschichtige Gürtelkomponente (116) definiert, ausgeführt wird.

5. Verfahren nach wenigstens einem der vorhergehenden Ansprüche, wobei die vorbestimmte Menge in dem Bereich von 50 mbar bis 600 mbar, bevorzugt 100 mbar bis 400 mbar, liegt.

6. Verfahren nach wenigstens einem der vorhergehenden Ansprüche, wobei das biaxiale Muster Korde, die sich entlang einer ersten Achse in der Mitte der einschichtigen Gürtelkomponente (116) erstrecken, und Korde, die sich entlang einer zweiten Achse in der Mitte der einschichtigen Gürtelkomponente (116) erstrecken, umfasst, wobei die erste Achse einen Winkel in einem Bereich von 2 bis 60 Grad, bevorzugt 10 bis 50 Grad, mit der Äquatorialebene des Reifens (1) bildet und wobei die zweite Achse einen Winkel in einem Bereich von -2 bis -60 Grad, bevorzugt -10 bis -50 Grad mit der Äquatorialebene des Reifens (1) bildet.

7. Verfahren nach wenigstens einem der vorhergehenden Ansprüche, wobei das biaxiale Muster Korde, die sich entlang einer ersten Achse in der Mitte der einschichtigen Gürtelkomponente (116) erstrecken, und Korde, die sich entlang einer zweiten Achse in der Mitte der einschichtigen Gürtelkomponente (116) erstrecken, umfasst, wobei die erste Achse einen ersten Winkel $\alpha$ mit der Äquatorialebene des Reifens (1) bildet und wobei die zweite Achse einen zweiten Winkel $-\alpha$ mit der Äquatorialebene des Reifens (1) bildet.

8. Verfahren nach wenigstens einem der vorhergehenden Ansprüche, ferner beinhaltend die Schritte eines individuellen Eintauchens der Korde (305, 405, 505) und/oder eines individuellen Klebrigmachens der Korde (305, 405, 505).

9. Verfahren nach wenigstens einem der vorhergehenden Ansprüche, wobei der Kord (305, 405, 505) Teil mehrerer individuell eingetauchter und individuell klebrig gemachter Korde ist.

10. Verfahren nach wenigstens einem der vorhergehenden Ansprüche, wobei der Kord (305, 405, 505) aus zwei verdrehten Aramidgarnen aufgebaut ist.

11. Verfahren nach wenigstens einem der vorhergehenden Ansprüche, wobei der Kord (305, 405, 505) aus einem der folgenden Materialien aufgebaut ist: Aramid, PEN, PET, PVA, PBO, POK, Rayon, Nylon, Kohlenstoff und Glasfaser.

12. Verfahren nach wenigstens einem der vorhergehenden Ansprüche, wobei die Karkassenkomponente unvulkanisierten Kautschuk umfasst.

**Revendications**

1. Procédé pour la confection d'un bandage pneumatique comprenant un composant faisant office de ceinture du type à couche unique, le procédé comprenant les étapes consistant à :

enrouler un câblé (305, 405, 505) ou une bande comprenant au moins un câblé (305, 405, 505) en continu autour d'un premier tambour conformément à un modèle prédéfini afin d'obtenir une maille de câblés ou de bandes définissant un composant faisant office de ceinture du type à couche unique (116) ;
appliquer un composant faisant office de bande de roulement sur le composant faisant office de ceinture du type à couche unique (116) ;
transférer le composant faisant office de ceinture du type à couche unique (116) et le composant faisant office de bande de roulement à un second tambour ;
appliquer le composant faisant office de ceinture du type à couche unique (116) et le composant faisant office de bande de roulement sur un composant faisant office de carcasse sur le second tambour, le composant faisant office de carcasse étant gonflé à une pression de gonflage prédéterminée ;
réduire la pression de gonflage prédéterminée du composant faisant office de carcasse à concurrence d'une valeur prédéterminée ; et
joindre par couture le composant faisant office de ceinture du type à couche unique (116) et le composant faisant office de bande de roulement au composant faisant office de carcasse.

2. Procédé selon la revendication 1, comprenant en outre le fait d'ajuster le composant faisant office de ceinture du type à couche unique (116) à une position prédéterminée sur le premier tambour; dans lequel la position prédéterminée sur le premier tambour est indiquée à l'aide d'un moyen optique ou au moyen d'un dispositif d'indication optique, comme par exemple une ou plusieurs lumières laser ou bien un ou plusieurs faisceaux laser.

3. Procédé selon la revendication 1 ou 2, dans lequel l'enroulement du câblé (305, 405, 505) ou de la bande est tel que le motif prédéterminé représente un motif biaxial qui permet de créer une maille de câblés ou de bandes définissant un composant biaxial faisant office de ceinture du type à couche unique (116).

4. Procédé selon la revendication 1, 2 ou 3, dans lequel l'enroulement du composant faisant office de ceinture du type à couche unique est réalisé par l'intermédiaire de l'enroulement d'un seul câblé ou d'une seule bande comprenant au moins un câblé, en continu autour du premier tambour en fonction du motif prédéfini pour ainsi obtenir la maille de câblés ou de bandes définissant le composant faisant office de ceinture du type à couche unique (116).

5. Procédé tel que présenté dans au moins une des revendications précédentes, dans lequel la valeur prédéterminée se situe dans la plage de 50 mbar à 600 mbar, de préférence de 100 mbar à 400 mbar.

6. Procédé tel que présenté dans au moins une des revendications précédentes, dans lequel le motif biaxial comprend des câblés s'étendant le long d'un premier axe au centre du composant faisant office de ceinture du type à couche unique (116) et des câblés s'étendant le long d'un second axe au centre du composant faisant office de ceinture du type à couche unique (116) ; dans lequel le premier axe forme un angle dans une plage de 2 à 60 degrés, de préférence de 10 à 50 degrés, avec le plan équatorial du bandage pneumatique (1) ; et dans lequel le second axe forme un angle dans une plage de -2 à -60 degrés, de préférence de -10 à -50 degrés, avec le plan équatorial du bandage pneumatique (1).

7. Procédé tel que présenté dans au moins une des revendications précédentes, dans lequel le motif biaxial comprend des câblés s'étendant le long d'un premier axe au centre du composant faisant office de ceinture du type à couche unique (116) et des câblés s'étendant le long d'un second axe au centre du composant faisant office de ceinture du type à couche unique (116) ; dans lequel le premier axe forme un premier angle a avec le plan équatorial du bandage pneumatique (1); et dans lequel le second axe forme un second angle -$\alpha$ avec le plan équatorial du bandage pneumatique (1).

8. Procédé tel que présenté dans au moins une des revendications précédentes, comprenant en outre les étapes consistant à tremper de manière individuelle les câblés (305, 405, 505) ou à rendre adhésifs de manière individuelle les câblés (305, 405, 505).

9. Procédé tel que présenté dans au moins une des revendications précédentes, dans lequel le câblé (305, 405, 505) fait partie de plusieurs câblés trempés de manière individuelle ou rendus adhésifs de manière individuelle.

10. Procédé tel que présenté dans au moins une des revendications précédentes, dans lequel le câblé (305, 405, 505) est réalisé à partir de deux fils d'aramide torsadés.

11. Procédé tel que présenté dans au moins une des revendications précédentes, dans lequel le câblé (305, 405, 505) est réalisé à partir d'une des matières suivantes, à savoir: des fibres d'aramide, de PEN, de PET, de PVA, de PBO, de POK, de rayonne, de nylon, de carbone et des fibres de verre.

12. Procédé tel que présenté dans au moins une des revendications précédentes, dans lequel le composant faisant office de carcasse comprend du caoutchouc non vulcanisé.

FIG-1

FIG-2

FIG-3

FIG-4

EP 3 173 222 B1

FIG-5

## REFERENCES CITED IN THE DESCRIPTION

**Patent documents cited in the description**

- US 20050194076 A
- US 3720569 A
- US 3589426 A
- FR 2429678 A
- US 4673014 A
- US 4269649 A
- US 2814331 A
- US 5380384 A
- US 4528052 A